Europäisches Patentamt

(19) European Patent Office

Office européen des brevets

(11) Publication number: **0 341 724 B1**

(12) **EUROPEAN PATENT SPECIFICATION**

(45) Date of publication of patent specification:
04.12.91 Bulletin 91/49

(51) Int. Cl.⁵: **C08F 210/06, C08F 4/649, C08F 2/34**

(21) Application number: 89108520.1

(22) Date of filing: 11.05.89

(54) Process for the preparation of random copolymers.

(30) Priority: 12.05.88 US 193093

(43) Date of publication of application:
15.11.89 Bulletin 89/46

(45) Publication of the grant of the patent:
04.12.91 Bulletin 91/49

(84) Designated Contracting States:
AT BE CH DE ES FR GB GR IT LI LU NL SE

(56) References cited:
EP-A- 0 115 940
FR-A- 2 516 520
GB-A- 2 143 834
US-A- 4 219 633

(73) Proprietor: UNION CARBIDE CORPORATION
39 Old Ridgebury Road
Danbury Connecticut 06817 (US)

(72) Inventor: Chun-Chien Twu, Fred
1150 Emerald Road
Charleston (25314) West Virginia (US)
Inventor: Burdett, Ian Donald
11 Estill Drive
Charleston (25314) West Virginia (US)

(74) Representative: Weinhold, Peter, Dr. et al
Patentanwälte Dr. V. Schmied-Kowarzik
Dipl.-Ing. G. Dannenberg Dr. P. Weinhold Dr. D.
Gudel Dipl.-Ing. S. Schubert Dr. P. Barz
Siegfriedstrasse 8
W-8000 München 40 (DE)

EP 0 341 724 B1

## Description

### Technical Field

This invention relates to a process for the preparation of random copolymers of ethylene and propylene.

### Background Art

In JP-A-291958, an application falling within the terms of Article 54(3) EPC, a process is provided for producing stereo regular polymers. More particularly, it was found that polymers having an isotactic index of at least 96 percent could be prepared in high yield at high production rates by polymerizing an alpha-olefin in a low pressure gas phase fluidized bed process at temperatures in excess of 80°C employing a catalyst system comprising (i) a solid catalyst precursor, which includes magnesium, titanium, halogen and an inner electron donor, i.e., a polycarboxylic acid ester containing two coplanar ester groups attached to adjacent carbon atoms; (ii) a hydrocarbylaluminum cocatalyst ; and (iii) an outer electron donor or selectivity control agent, i.e., a silicon compound containing a silicon-oxygen-carbon linkage wherein the atomic ratio of aluminum to silicon is in the range of about 0.5 : 1 to about 100 : 1 and the atomic ratio of aluminum to titanium is in the range of about 5 : 1 to about 300 : 1.

The catalyst system can be used to produce copolymers of ethylene and propylene in which a small amount of ethylene is incorporated at random into the backbone of polypropylene. The copolymerization is generally accomplished in a fluidized bed reactor. This kind of copolymer has advantages over polypropylene homopolymer in having better clarity and better heat sealing characteristics. Further, the stiffness of the random copolymer is lower than the homopolymer. The primary markets for these random copolymers are in film applications and blow-molding. Recently, some injection molded products have been made with random copolymers.

In order to improve the reactivity of the catalyst system, mentioned above, and thus, its productivity, it is known to increase that portion of the copolymer which is based on ethylene. Unfortunately, the use of conventional process conditions together with this catalyst system and additional ethylene results in large, blown-up, irregular shaped agglomerated copolymer particles, which are "popcorn" like or "flake" like in appearance. These particles are fairly rigid and tend not to break apart after they are formed. The irregular shape and the agglomeration are responsible for the low bulk density of the resin, and the low bulk density together with the large particle size translates into poor flow characteristics. This causes fluidization problems in the reactor, and plugs product discharge systems and other downstream equipment, to such an extent that continuous operation is essentially impossible.

### Disclosure of the Invention

An object of this invention, therefore, is to provide a process for the preparation of random copolymer of propylene and ethylene utilizing increased ethylene to provide enhanced activity, but with good flow properties. Other objects and advantages will become apparent hereinafter.

According to the present invention, a process for the copolymerization of at least the two comonomers, propylene and ethylene, has been discovered comprising contacting the comonomers in the gas phase in at least one reaction zone, under polymerization conditions, with a catalyst system comprising (i) a solid catalyst precursor, which includes magnesium ; titanium ; a halogen which is chlorine, bromine, or iodine, or mixtures thereof ; and a polycarboxylic acid ester containing two coplanar ester groups attached to adjacent carbon atoms ; (ii) a hydrocarbylaluminum cocatalyst ; and (iii) a silicon compound containing at least one silicon-oxygen-carbon linkage wherein the atomic ratio of aluminum to titanium is in the range of about 5 to about 300, with the proviso that the temperature in the reaction zone is in the range of about 50°C to about 150°C ; the molar ratio of aluminum to silicon compound is in the range of about 0.5 to about 100 ; the propylene partial pressure is in the range of about 345 to about 4134 kPa (about 50 to about 600 psi) ; and the ethylene partial pressure is in the range of about 1.72 to about 172 kPa (about 0.25 to about 25 psi).

### Detailed Description

The solid catalyst precursor is preferably prepared by halogenating a magnesium compound of the formula MgRR′ wherein R is an alkoxide or aryloxide group and R′ is an alkoxide or aryloxide group or a halogen with a halogenated tetravalent titanium compound containing at least two halogen atoms in the presence of a halohydrocarbon and a polycarboxylic acid ester containing two coplanar ester groups attached to adjacent carbon atoms. The alkoxide groups can contain 1 to 8 carbon atoms and the aryloxide groups 6 to 10 carbon atoms. The halogen can be chlorine, bromine, or iodine.

Suitable magnesium compounds are magnesium diethoxide, magnesium diisopropoxide, magnesium di-n-butoxide, magnesium diphenoxide, magnesium dinaphthoxide, ethoxy magnesium isobutoxide, ethoxy magnesium phenoxide, naphthoxy magnesium isoamyloxide, ethoxy magnesium bromide, isobutoxy magnesium chloride, phenoxy magnesium iodide, cumyloxy magnesium bromide, and naphthoxy magnesium chloride.

The halogenated tetravalent titanium compound containing at least two halogen atoms can have up to two alkoxy and/or aryloxy groups. Examples are $TiCl_4$, $TiBr_4$, diethoxy titanium dibromide, isopropoxy titanium triiodide, dihexoxy titanium dichloride, and phenoxy titanium trichloride.

The halohydrocarbon, while preferably aromatic, can be aliphatic or alicyclic. Suitable halohydrocarbons are chlorobenzene, bromobenzene, dichlorobenzene, dichlorodibromobenzene, chlorotoluene, dichlorotoluene, chloronaphthalene, dibromomethane, trichloromethane, 1,2-dichloroethane, trichloroethane, dichlorofluoroethane, hexachloroethane, trichloropropane, chlorobutane, dichlorobutane, chloropentane, trichlorofluorooctane, tetrachloroisooctane, dibromodifluorodecane, dibromocyclobutane, and trichlorocyclohexane.

The halogenated tetravalent titanium compound and the halohydrocarbon preferably contain no more than 12 carbon atoms.

Suitable polycarboxylic acid esters are characterized by a molecularly rigid structure wherein two ester groups are attached to adjacent carbon atoms of the molecule and lie in a single plane. Such esters include polycarboxylic acid esters containing two ester groups which are attached to (a) ortho carbon atoms of a monocyclic or polycyclic aromatic ring, each of said ester groups being further linked to a branched or unbranched chain hydrocarbon radical ; (b) vicinal carbon atoms of a non-aromatic monocyclic or polycyclic ring and which lie in a syn configuration with respect to each other, each of said ester groups being further linked to a branched or unbranched chain hydrocarbon radical ; or (c) vicinal double bonded carbon atoms of an unsaturated aliphatic compound and which lie in a syn configuration with respect to each other, each of said ester groups being further linked to a branched or unbranched chain hydrocarbon radical.

These suitable polycarboxylic acid esters are derived from a suitable polycarboxylic acid and a monohydric alcohol having a linear hydrocarbon moiety which may be branched or unbranched.

The alcohol component of said polycarboxylic acid esters contain e.g. up to 12 carbon atoms, preferably 3 to 12 carbon atoms. The number of carbon atoms of the polycarboxylic acid moities is preferably 6 to 20, with the more preferred range of 8 to 16 carbon atoms for corresponding aromatic compounds and 6 to 10 carbon atoms for non-aromatic cyclic compounds. Examples of polycarboxylic acid esters are mentioned dimethyl phthalate, diethyl phthalate, di-n-propyl phthalate, diisopropyl phthalate, di-n-butyl phthalate, diisobutyl phthalate, di-tert-butyl phthalate, diisoamyl phthalate, di-tert-amyl phthalate, dineopentyl phthalate, di-2-ethylhexyl phthalate, di-2-ethyldecyl phthalate, diethyl-1,2-fluorenedicarboxylate, diisopropyl-1-,2-ferrocenedicarboxylate, cis-diisobutyl-cyclobutane-1,2-dicarboxylate, endo-diisobutyl-5-norbornene-2,3-dicarboxylate, and endo-diisobutyl-bicyclo[2.2.2]oct-5-ene-2,3-dicarboxylate, diisobutyl maleate, and diisoamyl citraconate.

Halogenation of the magnesium compound is preferably effected employing an excess of titanium compound, about 2 mols to about 100 mols of titanium compound per mole of magnesium compound. The halohydrocarbon is employed preferably in an amount sufficient to dissolve the titanium compound and the ester, and to adequately disperse the solid, insoluble magnesium compound. The magnesium compound can be used in an amount of about 0.005 to 2.0 mols of magnesium compound per mol of halohydrocarbon and the ester in an amount of about 0.0005 to about 2.0 mols of ester per mol of titanium compound. The halogenation of the magnesium compound can be carried out in a temperature range of about 60°C to about 150°C over a period of about 0.1 to about 6 hours. The halogenated product is a solid material which can be isolated from the liquid reaction medium by filtration or decantation. After separation, it is treated one or more times with the titanium compound in the same molar ratio to remove residuals and maximize catalyst activity. The halohydrocarbon is usually employed during this treatment to dissolve the titanium compound and disperse the halogenated product. The treatment is preferably carried out twice, the second treatment being in the presence of a polycarboxylic acid halide containing two coplanar acid groups attached to adjacent carbon atoms. About 5 to about 200 millimols of acid halide are generally employed per gram atom of magnesium. Suitable acid halides include phthaloyl dichloride, 2,3-naphthalene di-carboxylic acid dichloride, endo-5-norbornene-2,3-dicarboxylic acid dichloride, maleic acid dichloride, and citraconic acid dichloride. After the solid halogenated product has been treated one or more times with additional halogenated tetravalent titanium compound, it is separated from the liquid reaction medium, washed with an inert hydrocarbon to remove unreacted titanium compounds, and dried. The final washed product suitably has a titanium content of about 0.5 percent by weight to about 6.0 percent by weight. The atomic ratio of titanium to magnesium in the final product is suitably in the range of about 0.01 : 1 to about 0.2 : 1. The polycarboxylic acid ester is suitably present in a molar ratio of ester to magnesium of

EP 0 341 724 B1

about 0.005 : 1 to about 10 : 1.

The hydrocarbyl aluminum cocatalyst can be represented by the formula $R_3Al$ wherein each R is an alkyl, cycloalkyl, aryl, or hydride radical ; at least one R is a hydrocarbyl radical ; two or three R radicals can be joined in a cyclic radical forming a heterocyclic structure ; each R can be alike or different ; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical, i.e., the radical can contain alkyl, aryl, and/or cycloalkyl groups. Examples of suitable radicals are : methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, naphthal, methylnaphthyl, cyclohexyl, cycloheptyl, and cyclooctyl.

Examples of suitable hydrocarbyl aluminum compounds are as follows : triisobutylaluminum, trihexylaluminum, di-isobutylaluminum hydride, dihexylaluminum hydride, isobutylaluminum dihydride, hexylaluminum dihydride, di-isobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. The preferred hydrocarbyl aluminums are triethylaluminum, triisobutylaluminum, trihexylaluminum, di-isobutylaluminum hydride, and dihexylaluminum hydride.

The silicon compounds include compounds having the formula $R_aSiY_bX_c$ wherein R is a hydrocarbon radical having 1 to 20 carbon atoms ; Y is —OR or —OCOR ; and X is hydrogen, chlorine, bromine, or iodine ; each R and Y are alike or different ; a is an integer from 0 to 3 ; b is an integer from 1 to 4 ; c is 0 or 1 ; and a + b + c = 4. R can be substituted or unsubstituted. Silicon compounds containing Si-O-Si groups can also be employed providing that at least one Si-O-C group is present. Examples of useful silicon compounds are diphenyldimethoxysilane, n-propyltrimethoxysilane, di-tert-butyldimethoxysilane, diphenyldiisobutoxysilane, diisobutyldimethoxysilane, and dimethyldiethoxysilane.

The polymer is prepared in the gas phase, generally, by continuously contacting the catalyst system with at least the two comonomers, propylene and ethylene, in one or more fluidized bed reactors such as that described in United States Patent 4,482,687 or another conventional reactor for the gas phase production of, for example, polypropylene or propylene copolymers.

Other comonomers can be included in the propylene/ethylene copolymer. In this specification, the term "copolymer" is considered to mean a polymer based on two or more comonomers. The additional comonomers can be alpha-olefins having 4 to 12 carbon atoms or conjugated or non-conjugated dienes containing 5 to 25 carbon atoms. Useful alpha-olefins preferably do not contain any branching on carbon atoms closer than two carbon atoms removed from the double bond. Examples of suitable alpha-olefins include 1-butene, 1-hexene, 4-methylpentene-1, 1-heptene, and 1-octene. Examples of the dienes are 1,4-pentadiene, 1,4-hexadiene, 1,5-hexadiene, dicyclopentadiene, cyclohexadiene, 1-vinyl-1-cyclopentene, and the alkylbicyclononadienes, indenes, and norbornenes. Ethylidene norbornene is an example of the latter. The non-conjugated dienes are preferred.

In the copolymer, the portion attributed to propylene is in the range of about 80 to about 99.5 percent by weight based on the weight of the copolymer and is preferably in the range of about 90 to about 99.5 percent by weight ; the portion attributed to ethylene is in the range of about 0.5 to about 20 percent by weight and is preferably in the range of about 0.5 to about 10 percent by weight ; and the portion attributed to other comonomers, if any, is in the range of about 0.5 to about 20 percent by weight. All percentages are based on the weight of the random copolymer.

The amount of ethylene incorporated into the copolymer, i.e., the portion of the copolymer based on ethylene, is arrived at by determining the crystalline melting point of the copolymer. This melting point is measured with a Differential Scanning Calorimeter (DSC). The melting point of propylene homopolymer varies between 161°C and 165°C depending on crystallinity while the melting point of $C_3/C_2$ random copolymer is depressed as the amount of incorporated ethylene increases and, as a rule of thumb, 5°C in melting point depression corresponds to one weight percent of ethylene incorporation. The DSC or crystalline melting point is found to be a linear function of the ethylene to propylene gas phase molar ratio. Therefore, the weight percent of ethylene incorporation is also linearly proportional to the ethylene to propylene gas phase molar ratio.

The fluidized bed, or other gas phase, reactor is operated at a temperature in the range of about 50°C to about 150°C and preferably at a temperature in the range of about 60°C to about 90°C. The operating pressure is preferably in the range of about 1378 kPaG (200 psig) to about 4479 kPaG (650 psig) or higher and preferably about 1723 kPaG (250 psig) to about 3790 kPaG (550 psig). The partial pressure of the propylene is in the range of about 345 to about 4134 kPa (about 50 to about 600 psi) and is preferably about 1034 to about 3445 kPa (about 150 to about 500 psi). The partial pressure of ethylene is in the range of about 1.72 to about 172 kPa (about 0.25 to about 25 psi) and is preferably about 6.89 to about 103 kPa (about 1 to about 15 psi). The

4

total partial pressure of other comonomers can be about 3.45 to about 517 kPa (about 0.5 to about 75 psi). The molar ratio of ethylene to propylene is about 0.005 to 0.056 and is preferably about 0.01 to 0.045. The superficial gas velocity, which can be calculated by measuring cycle gas flow, is, generally, maintained in the range of about 0.03 to about 1.53 m (about 0.1 to about 5 feet) per second and is preferably in the range of about 0.15 to about 0.92 m (about 0.5 to about 3 feet) per second. The superficial gas velocity is preferably used together with a slow transition in order to optimize the results. In other words, the ethylene concentration in the gas phase is increased slowly to the desired level for the product.

The residence time of the alpha-olefin in the reactor is normally in the range of about 1 to about 20 hours and preferably about 2 to about 6 hours. The velocity of the fluidizing gas is in the range of about 0.03 to about 1.53 m (about 0.1 to about 5.0 feet) per second or higher and preferably about 0.15 to about 0.61 m (about 0.5 to about 2.0 feet) per second. Hydrogen or another chain transfer agent can be used in the process. The molar ratio of hydrogen to alpha-olefin used in the fluidized bed reactor is normally in the range of about 0.0005 : 1 to about 0.2 : 1 and is preferably in the range of about 0.01 : 1 to about 0.1 : 1. This translates into a hydrogen partial pressure in the range of about 0.69 kPa (0.1 psi) to about 1378 kPa (200 psi) and preferably about 3.45 kPa (0.5 psi) to about 345 kPa (50 psi). The balance of the operating pressure utilized in the reactor, i.e., after the partial pressure of propylene, ethylene, and, if used, other comonomers and the hydrogen partial pressure are considered, can be made up by using an inert gas such as nitrogen.

Where it is desired to produce the propylene/ethylene random copolymer only, normally one fluidized bed reactor is used. In the case of impact grade copolymers, a second fluidized bed reactor is needed.

In subject process, the components of the catalyst system are maintained in an amount such that the atomic ratio of aluminum in the cocatalyst to silicon in the selectivity control agent is about 0.5 to about 100, and preferably is about 1 to about 25, and the atomic ratio of aluminum in the cocatalyst to titanium in the solid catalyst component is about 5 to 300, and is preferably about 10 to about 200.

The results which can be obtained by the use of the above enumerated parameters are as follows :

Melt Flow Rate can be in the range of about 0.01 to about 1000 and is preferably in the range of about 0.05 to about 500. It is determined under ASTM D-1238, Condition L, measured at 230°C with a 2160 gram load, and reported as grams per 10 minutes (g/10 min).

Average Particle Size can be in the range of about 0.127 to about 12.7 mm (about 0.005 to about 0.5 inch) and is preferably in the range of about 0.254 to about 2.03 mm (about 0.01 to about 0.08 inch). Average particle size is determined as follows : pass the powders through a series of ASTM standard sieves, weigh the retained particles on each sieve, and calculate the number average particle size.

Settled Bulk Density can be in the range of about 80 to about 561 kg/m$^3$ (about 5 to about 35 pounds per cubic foot) and is preferably in the range of about 240 to about 401 kg/m$^3$ (about 15 to about 25 pounds per cubic foot). Settled bulk density is determined as follows : a resin sample of a fixed volume is collected and weighed. Bulk density is calculated by dividing the weight by the volume.

Production Rate can be about 2270 to about 18160 kg (about 5 to about 40 times 1000 pounds) of copolymer per hour and is preferably about 4540 to about 13620 kg (about 10 to about 30 times 1000 pounds) of copolymer per hour. Production rate is determined by weighing the resin produced every hour.

Xylene Solubles are held to a maximum of about 50 percent by weight based on the weight of the copolymer and is preferably maintained at a level no higher than about 30 percent by weight. Xylene solubles are defined as the percent by weight that stays in solution after the copolymer sample is dissolved in hot xylene and the solution is allowed to cool to 23°C. Low xylene solubles are desired to avoid a phenomenon called "plate-out", which is a migration of the low molecular weight species to the surface of the resin during processing. This can occur if the xylene solubles value becomes excessive.

FDA % hexane extractables are maintained at a level no higher than about 20 percent by weight based on the weight of the copolymer and is preferably kept at a level no higher than about 5.5 percent by weight. A film sample of the copolymer 77 to 102 μm (3 to 4 mils) in thickness (prepared by chill roll extrusion) is extracted at 50°C in n-hexane for 2 hours and then filtered. The filtrate is evaporated and the total residue weighed as a measure of the n-hexane extractable fraction.

The advantages of the invention are essentially no fluidization problems or plugging ; stable, continuous operation ; acceptable morphology, i.e., small particle size, regular particle shape, and higher settled bulk density ; increased catalyst productivity ; acceptable xylene solubles level ; high ethylene content ; wider product compositional range ; reasonable production rate ; and low odor levels.

The invention is illustrated by the following examples :

## Example 1

### Preparation of Solid Catalyst Component

To a solution of 70 milliliters of titanium tetrachloride (120 grams, 0.64 mol) in 3.7 liters of chlorobenzene are added, in succession, 180 milliliters of diisobutyl phthalate (187 grams, 0.67 mol), 590 grams (5.2 mols) of magnesium diethoxide, and a solution of 4.7 liters of titanium tetrachloride (8100 grams, 43 mols) in 1.2 liters of chlorobenzene. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a solution of 4.7 liters of titanium tetrachloride (8100 grams, 43 mols) in 1.2 liters of chlorobenzene at room temperature. A solution of 45 grams (0.22 mol) of phthaloyl dichloride in 3.7 liters of chlorobenzene is added to the slurry at room temperature, and the resulting slurry is then heated to 110°C with stirring, the temperature being maintained for 30 minutes. At the end of this time, the mixture is filtered while hot. A solid material is collected.

The solid material is reslurried in a solution of 4.7 liters of titanium tetrachloride (8100 grams, 43 mols) in 1.2 liters of chlorobenzene at room temperature. An additional 3.7 liters of chlorobenzene is then added to the slurry at room temperature and the resulting slurry is heated to 110°C with stirring, the temperature being maintained in 30 minutes. At the end of this time, the mixture is filtered while hot. A solid material is collected.

The solid material is reslurried once again in a solution of 4.7 liters of titanium tetrachloride (8100 grams, 43 mols) in 1.2 liters of chlorobenzene at room temperature. An additional 3.2 liters of chlorobenzene is then added to the slurry at room temperature, and the resulting slurry is heated to 110°C with stirring, the temperature being maintained for 30 minutes. At the end of this time, the mixture is filtered while hot. The residue is washed 6 times with 500 milliliter portions of hexane at 25°C, and then dried under a nitrogen purge. The product weighs about 500 grams.

### Examples 2 to 8

The solid catalyst component prepared in Example 1 is continuously fed into a fluidized bed reactor as a 30 percent by weight dispersion in mineral oil. Simultaneously, and continuously, triethylaluminum cocatalyst as a 2.5 percent by weight solution in isopentane and diphenyldimethoxysilane (selectivity control agent) as a 1.0 percent by weight solution in isopentane are also added to the reactor.

Sufficient solid catalyst component, cocatalyst, and selectivity control agent are introduced into the reactor to maintain the molar ratios of aluminum to selectivity control agent (SCA) and of triethylaluminum (TEAL) to titanium set forth in the Table.

Propylene, ethylene, hydrogen, and nitrogen are added to maintain a specified total pressure except that no hydrogen is added in example 2. The total pressure and partial pressures of propylene and ethylene are mentioned in the Table as well as the hydrogen/propylene molar ratio. The balance of the total pressure is made up with nitrogen. The gas feed is accomplished through the use of a syringe continuous feeder. Except for example 7, the resin product is transferred from the fluidized bed to a purge bin in which the resin flows downward by gravity and humidified nitrogen flows upward so that the contained moisture can deactivate the catalyst components in the resin to reduce odor. Example 6 is cracked, i.e., peroxide compounds are added to the resin so that the melt flow is increased or the molecular weight of the polymer is reduced.

The reactor is a pilot scale model, 356 mm (14 inches) in diameter and 8.54 m (28 feet) in height. It is operated in the condensing mode. Condensing mode operation is described in United States Patents 4,543,399 and 4,588,790 wherein the recycle gas stream is intentionally cooled to a temperature at or below the dew point of the recycle gas stream to produce a two-phase gas/liquid mixture under conditions such that the liquid phase of said mixture will remain entrained at least from the point of entry until it passes into the fluidized bed.

Variables and results are set forth in the Table.

Notes with respect to the Table :

1. The temperature maintained in the reactor is given in degrees Centigrade (°C).
2. SCA = selectivity control agent
3. TEAL = triethyl aluminum
4. The residence time of each pound of propylene and ethylene, combined, in the reactor is given in hours (hrs).
5. The parts per million (ppm) parts of copolymer (by weight) of titanium is given. The ppm of titanium are determined by the spectrophotometric method.

6. DSC melting point (°C) is determined by heating a small sample in a differential scanning calorimeter at a constant rate, cooling at a constant rate, and reheating at a constant rate.

7. DSC crystallinity (%) is determined as follows : the heat of fusion of a copolymer sample is determined by differential scanning calorimeter. This value is, then, divided by 39.4 calories per gram to give the percent DSC crystallinity.

8. Ethylene (%) = the portion of the copolymer, in percent by weight, attributed to ethylene. It is estimated from the DSC melting point.

9. 1% SFM (kpsi × $10^{-2}$) is the secan flexural modulus, a measure of stiffness. It is defined as the slope of the stress-strain line at one percent strain. The unit is kpsi (kpsi = 100 pounds per square inch). 1% SFM is determined according to ASTM D-790.

10. Tensile Strength (kpsi) is determined according to ASTM 412.

11. Gels are believed to be composed of high molecular weight resin. They are a detriment to film optical properties and are responsible for a loss of production in processing because of broken bubbles and split webs. The determination her is made by observation.

12. Izod (R.T.) is determined by the method of ASTM D256. R.T. = room temperature (25°C).

13. % FDA extractables are determined from the copolymer extruded with 350 ppm of an antioxidant.

14. Odor is determined as follows : one pound of granular copolymer is introduced into a sealed glass jar and heated to 90°C under circulating air. After shaking well, the copolymer is given to a three person odor panel to smell and give a rating of 0 to 10. Usually a rating of 0 to 3 is considered a low level of odor and a rating of 4 or more, a high level of odor.

15. Mn = number average molecular weight.

16. Mw = weight average molecular weight.

17. Mz = higher moment molecular weight portions of molecular weight distribution.

18. Mw/Mn = polydispersity, a measure of the breadth of the molecular weight distribution.

19. The parts per million of copolymer (by weight) of residual elements other than titanium are given. The ppm are determined by inductively coupled plasma spectroscopy.

In the following table 1 inch = 25.4 mm 1 psi = 6.89 kPa and 1 pound = 0.454 kg.

TABLE

| Example | 2 | 3 | 4 | 5 | 6 | 7 | 8 |
|---|---|---|---|---|---|---|---|
| temperature (°C) | 80 | 80 | 80 | 80 | 80 | 80 | 65 |
| total pressure (psia) | 315 | 315 | 315 | 315 | 321 | 319 | 322 |
| propylene partial pressure (psia) | 168 | 159 | 158 | 158 | 163 | 172 | 165 |
| ethylene partial pressure (psia) | 3.8 | 5.3 | 5.0 | 6.7 | 6.4 | 7.8 | 8.1 |
| ethylene (% by wt. of total gases) | 1.2 | 1.7 | 1.6 | 2.1 | 2.0 | 2.5 | 2.5 |
| ethylene/propylene molar ratio (x100) | 2.3 | 3.3 | 3.2 | 4.2 | 3.9 | 4.5 | 4.9 |
| aluminum/SCA molar ratio | 1.5 | 2.9 | 2.6 | 1.9 | 2.4 | 2.2 | 1.0 |
| hydrogen/propylene molar ratio (x1000) | - | 4.1 | 3.8 | 5.4 | 0.75 | 0.5 | 187 |
| TEAL/titanium molar ratio | 51 | 61 | 63 | 45 | 63 | 62 | 44 |
| residence time (hours) | 3.6 | 4 | 4 | 3.8 | 3 to 4 | 3 to 4 | 4 to 5 |
| | | | | | | | |
| Resin Properties | | | | | | | |
| Melt Flow Rate (g/10 min) | - | 4.5 | 4.1 | 3.5 | 0.52 | 0.58 | 118 |
| Settled Bulk Density (lbs/cu.ft.) | 22.7 | 23.0 | 22.6 | 20.3 | 20.2 | 19.0 | 18.8 |
| Average Particle Size (inch) | 0.019 | 0.028 | 0.027 | 0.026 | 0.024 | 0.05 | 0.019 |
| Titanium Residue (ppm) | 2.3 | 1.8 | 1.8 | 3 | 2.0 | 1.9 | 2.7 |
| Xylene Solubles (%) | 6.5 | 7.9 | 8.4 | 10.5 | 9.0 | 12.0 | 19.0 |
| DSC melting point (°C)(?) | 143 | 138 | 138 | 130.5 | 129.4 | 125.9 | 131.5 |
| DSC crystallinity (%) | - | 98 | - | 94 | - | - | - |
| ethylene (%) | 4.4 | 5.4 | 5.4 | 6.9 | 7.1 | 7.8 | 6.7 |
| 1% SFM (kpsi x 10⁻²) | - | 1.01 | - | 0.76 | 0.85 | 0.74 | - |
| tensile strength (kpsi) | - | 1.04 | - | 0.80 | - | - | - |
| gels | - | - | - | - | few | none | - |
| Izod (R.T.) | - | 1.3 | - | 2.4 | 9.2 | 10 | - |
| % FDA extractables | - | 2.26 | - | 2.83 | 1.4 to 1.9 | 1.5 | - |
| Odor | - | 1 to 2 | - | 0 to 2 | - | - | - |
| | | | | | | | |
| Molecular Weight Distribution | | | | | | | |
| Mn | | | | 59,600 | | | |
| Mw | | | | 308,100 | | | |
| Mz | | | | 851,800 | | | |
| Mw/Mn | | | | 5.17 | | | |
| | | | | | | | |
| Residue (other than Ti) (ppm) | | | | | | | |
| Al | | | | 24 | | | |
| Ca | | | | <1 | | | |
| Fe | | | | <1 | | | |
| Mg | | | | 18 | | | |
| Na | | | | <5 | | | |
| Si | | | | 35 | | | |
| Zn | | | | 191 | | | |

EP 0 341 724 B1

- 20 -

**Claims**

1. A process for the production of a random copolymer, which comprises contacting propylene and ethylene and, optionally, one or more higher alpha-olefin monomers in the gas phase in a reaction zone, under polymerization conditions, with a catalyst system comprising (i) a solid catalyst precursor, which includes magnesium; titanium ; a halogen which is chlorine, bromine, or iodine, or mixtures thereof ; and a polycarboxylic acid ester containing two coplanar ester groups attached to adjacent carbon atoms ; (ii) a hydrocarbyl aluminum cocatalyst ; and (iii) a silicon compound containing at least one silicon-oxygen-carbon group wherein the atomic ratio of aluminum to titanium is in the range of about 5 to about 300,
with the proviso that the temperature in the reaction zone is in the range of about 50°C to about 150°C, e.g. of about 60°C to about 90°C ; the molar ratio of aluminum to silicon compound is in the range of about 0.5 to about 100, e.g. of about 1 to about 25 ; the propylene partial pressure is in the range of about 345 to about 4134 kPa (about 50 to about 600 psi), e.g. of about 1034 to about 3445 kPa (about 150 to about 500 psi) ; and the ethylene partial pressure is in the range of about 1.72 to about 172 kPa (about 0.25 to about 25 psi), e.g. of about 0.89 to about 103 kPa (about 1 to about 15 psi).

2. The process defined in claim 1 wherein the process is carried out continuously and the reaction zone is a fluidized bed.

3. The process defined in one or both of the claims 1-2 wherein the solid catalyst precursor is obtained by halogenating a magnesium compound having the formula MgRR' wherein R is an alkoxide or aryloxide group and R' is R or halogen with a halogenated tetravalent titanium compound containing at least two halogen atoms in the presence of a halohydrocarbon and a polycarboxylic acid ester containing two coplanar ester groups attached to adjacent carbon atoms.

4. The process defined in one or more of the claims 1-3 wherein the hydrocarbyl aluminum cocatalyst is trialkylaluminum.

5. The process defined in one or more of the claims 1-4 wherein the silicon compound has the formula

$$R_a SiY_b X_c$$

wherein R is a hydrocarbon radical having 1 to 20 carbon atoms ; Y is —OR or —OCOR ; and X is hydrogen, chlorine, bromine, or iodine ; each R and Y are alike or different ; a is an integer from 0 to 3 ; b is an integer from 1 to 4 ; c is 0 or 1 ; and $a + b + c = 4$.

6. The process defined in one or more of the claims 1-5 wherein the magnesium compound is magnesium diethoxide, the halogenated tetravalent titanium compound is titanium tetrachloride, the halohydrocarbon is chlorobenzene, and the polycarboxylic acid is diisobutyl phthalate.

7. The process defined in one or more of the claims 1-6 wherein the silicon compound is diphenyldimethoxysilane.

8. The process defined in one or more of the claims 1-6 wherein the silicon compound is n-propyltrimethoxysilane.

9. The process defined in one or more of the claims 1-6 wherein the silicon compound is di-tert-butyldimethoxysilane.

**Patentansprüche**

1. Verfahren zur Herstellung eines statistischen Copolymers, das umfaßt : das Inberührungbringen von Propylen und Ethylen und gegebenenfalls einem oder mehreren höheren α-Olefinmonomeren in der Gasphase in einer Reaktionszone unter Polymerisationsbedingungen mit einem Katalysatorsystem, das (i) einen festen Katalysatorvorläufer, der Magnesium, Titan, ein Halogen, wie Chlor, Brom oder Jod, oder deren Mischungen und einen Polycarbonsäureester, der zwei koplanare Estergruppen, die an benachbarte Kohlenstoffatome gebunden sind, enthält, (ii) einen Hydrocarbylaluminium-Kokatalysator und (iii) eine Siliciumverbindung, die mindestens eine Silicium-Sauerstoff-Kohlenstoffgruppe enthält, umfaßt, in dem das Atomverhältnis von Aluminium zu Titan im Bereich von etwa 5 bis etwa 300 liegt,
mit der Maßgabe, daß die Temperatur in der Reaktionszone im Bereich von etwa 50 bis etwa 150°C, z.B. bei etwa 60 bis etwa 90°C, liegt, das Mol-Verhältnis von Aluminium zur Siliciumverbindung im Bereich von etwa 0,5 bis etwa 100, z.B. von etwa 1 bis etwa 25, liegt, der Propylenpartialdruck im Bereich von etwa 345 bis etwa 4134 kPa (etwa 50 bis etwa 600 psi), z.B. von etwa 1034 bis etwa 3445 kPa (etwa 150 bis etwa 500 psi), liegt und der Ethylenpartialdruck im Bereich von etwa 1,72 bis etwa 172 kPa (etwa 0,25 bis etwa 25 psi), z.B. von etwa 6,89 bis etwa 103 kPa (etwa 1 bis etwa 15 psi), liegt.

2. Verfahren gemäß Anspruch 1, worin das Verfahren kontinuierlich durchgeführt wird und die Reaktionszone ein Wirbelbett ist.

3. Verfahren gemäß einem oder beiden der Ansprüche 1 und 2, worin der feste Katalysatorvorläufer erhalten wird, indem man eine Magnesiumverbindung mit der Formel MgRR', worin R eine Alkoxid- oder Aryloxidgruppe ist und R' R oder Halogen bedeutet, mit einer halogenierten vierwertigen Titanverbindung, die mindestens zwei Halogenatome enthält, in Gegenwart eines Halogenkohlenwasserstoffes und eines Polycarbonsäureesters, der zwei koplanare, an benachbarte Kohlenstoffatome gebundene Estergruppen enthält, halogeniert.

4. Verfahren gemäß einem oder mehreren der Ansprüche 1 bis 3, worin der Hydrocarbylaluminium-Kokatalysator Trialkylaluminium ist.

5. Verfahren gemäß einem oder mehreren der Ansprüche 1 bis 4, worin die Siliciumverbindung die Formel

$$R_a SiY_b X_c$$

hat, worin R ein Kohlenwasserstoffrest mit 1 bis 20 Kohlenstoffatomen ist; Y —OR oder —OCOR bedeutet und X Wasserstoff, Chlor, Brom oder Jod ist, R und Y jeweils gleich oder verschieden sind, a eine ganze Zahl von 0 bis 3 ist, b eine ganze Zahl von 1 bis 4 ist, c 0 oder 1 ist und a + b + c = 4 ist.

6. Verfahren gemäß einem oder mehreren der Ansprüche 1 bis 5, worin die Magnesiumverbindung Magnesiumdiethoxid ist, die halogenierte vierwertige Titanverbindung Titantetrachlorid ist, der Halogenkohlenwasserstoff Chlorbenzol ist und die Polycarbonsäure Diisobutylphthalat ist.

7. Verfahren gemäß einem oder mehreren der Ansprüche 1 bis 6, worin die Siliciumverbindung Diphenyldimethoxysilan ist.

8. Verfahren gemäß einem oder mehreren der Ansprüche 1 bis 6, worin die Siliciumverbindung n-Propyltrimethoxysilan ist.

9. Verfahren gemäß einem oder mehreren der Ansprüche 1 bis 6, worin die Siliciumverbindung Di-t-butyldimethoxysilan ist.


**Revendications**

1. Procédé de production d'un copolymère statistique, qui consiste à faire entrer du propylène et de l'éthylène et, le cas échéant, un ou plusieurs monomères alpha-oléfiniques supérieurs en contact en phase gazeuse dans une zone de réaction, dans des conditions de polymérisation, avec une composition de catalyseur comprenant (i) un précurseur de catalyseur solide, qui renferme du magnésium ; du titane ; un halogène qui est du chlore, du brome ou de l'iode ou leurs mélanges ; et un ester d'acide polycarboxylique contenant deux groupes ester coplanaires attachés à des atomes adjacents de carbone ; (ii) un cocatalyseur qui est un hydrocarbylaluminium ; et (iii) un composé de silicium contenant au moins un groupe siliciumoxygène-carbone, le rapport atomique de l'aluminium au titane se situant dans la plage d'environ 5 à environ 300 ;
sous réserve que la température dans la zone de réaction se situe dans la plage d'environ 50°C à environ 150°C, par exemple d'environ 60°C à environ 90°C ; que le rapport molaire du composé d'aluminium au composé de silicium se situe dans la plage d'environ 0,5 à environ 100, par exemple d'environ 1 à environ 25; que la pression partielle de propylène se situe dans la plage d'environ 345 à environ 4134 kPa (environ 50 à environ 600 lb/in²), par exemple d'environ 1034 à environ 3445 kPa (environ 150 à environ 500 lb/in²) ; et que la pression partielle d'éthylène se situe dans la plage d'environ 1,72 à environ 172 kPa (environ 0,25 à environ 25 lb/in²), par exemple d'environ 6,89 à environ 103 kPa (environ 1 à environ 15 lb/in²).

2. Procédé suivant la revendication 1, qui est mis en oeuvre en continu, et la zone de réaction est un lit fluidisé.

3. Procédé suivant l'une des revendications 1 et 2 ou les deux, dans lequel le précurseur solide de catalyseur est obtenu par halogénation d'un composé de magnésium répondant à la formule MgRR' dans laquelle R est un groupe alcoolate ou arylate et R' représente R ou un halogène, avec un composé de titane tétravalent halogéné comprenant au moins deux atomes d'halogène en présence d'un hydrocarbure halogéné et d'un ester d'acide polycarboxylique contenant deux groupes ester coplanaires attachés à des atomes adjacents de carbone.

4. Procédé suivant une ou plusieurs des revendications 1 à 3, dans lequel l'hydrocarbylaluminium utilisé comme cocatalyseur est un trialkylaluminium.

5. Procédé suivant une ou plusieurs des revendications 1 à 4, dans lequel le composé de silicium répond

à la formule

$$R_aSiY_bX_c$$

dans laquelle R est un radical hydrocarboné ayant 1 à 20 atomes de carbone ; Y est un groupe —OR ou —OCOR ; et X est l'hydrogène, le chlore, le brome ou l'iode ; les groupes R et Y sont identiques ou différents; a est un nombre entier de 0 à 3 ; b est un nombre entier de 1 à 4 ; c a la valeur 0 ou 1 ; et la somme a + b + c est égale à 4.

6. Procédé suivant une ou plusieurs des revendications 1 à 5, dans lequel le composé de magnésium est le diéthylate de magnésium, le composé de titane tétravalent halogéné est le tétrachlorure de titane, l'hydrocarbure halogéné est le chlorobenzène et l'acide polycarboxylique est le phtalate de diisobutyle.

7. Procédé suivant une ou plusieurs des revendications 1 à 6, dans lequel le composé de silicium est le diphényldiméthoxysilane.

8. Procédé suivant une ou plusieurs des revendications 1 à 6, dans lequel le composé de silicium est le n-propyltriméthoxysilane.

9. Procédé suivant une ou plusieurs des revendications 1 à 6, dans lequel le composé de silicium est le di-tertio-butyldiméthoxysilane.